# EUROPÄISCHE PATENTSCHRIFT

(11) **EP 3 401 358 B1**
(45) Veröffentlichungstag und Bekanntmachung des Hinweises auf die Patenterteilung: **14.04.2021**
(21) Anmeldenummer: 17169930.9
(22) Anmeldetag: 08.05.2017
(51) Int. Cl.: B05D 7/02, F16J 15/3284, C08J 7/12, B05D 1/00

(54) **PLASMA-BESCHICHTETES DICHTELEMENT**
PLASMA-COATED SEALING ELEMENT
ÉLÉMENT D'ÉTANCHÉITÉ REVÊTU DE PLASMA

(43) Veröffentlichungstag der Anmeldung: 14.11.2018
(73) Patentinhaber: Carl Freudenberg KG, 69469 Weinheim (DE)
(72) Erfinder: von Fragstein, Friederike, 69120 Heidelberg (DE); Adler, Matthias, 64646 Heppenheim (DE); Schnetz, Thomas, 68723 Schwetzingen (DE); Rutz, Stephan, 69469 Weinheim (DE); Hallstein, Katharina, 64658 Fuerth/Kroeckelbach (DE); Feller, Kai, 69483 Wald-Michelbach (DE); Traber, Boris, 69493 Hirschberg (DE); Prem, Erich, 69502 Hemsbach (DE)

(56) Entgegenhaltungen:
- DE-A1-102009 046 947
- DE-B4-102012 010 603
- B. JACOBY ET AL: "abscheidung charakterisierung und anwndung von plasma-polymerschichten auf HMDSO-Basis", VAKUUM IN FORSCHUNG UND PRAXIS, Bd. 18, Nr. 4, 1. Januar 2006 (2006-01-01) , Seiten 12-18, XP055330192,

## Beschreibung

Die Erfindung betrifft die Verwendung eines Dichtelements zum dynamischen Abdichten eines Dichtkörpers in Gegenwart eines Schmierstoffs, wobei das Dichtelement einen elastomeren Grundkörper und eine Plasma-Beschichtung aufweist. Die Erfindung betrifft auch Dichtsysteme, Verfahren zum Abdichten, Dichtelemente und Verfahren zu deren Herstellung.

### Stand der Technik

Im Gebiet der Dichtungstechnik werden bewegte Maschinenteile in Aggregaten mit geeigneten Dichtelementen (Dichtungsartikeln) abgedichtet. Dabei findet bei dynamischen Dichtungen eine Bewegung des abzudichtenden Dichtkörpers gegenüber einem Dichtelement statt. Beispiele dynamischer Dichtungen sind Gleitringdichtungen, Radialwellendichtringe, Labyrinthwellendichtungen, Stangendichtungen, O- oder Kolbenringe. Die bewegte Grenzfläche bei dynamischen Dichtungen wird als Dichtspalt bezeichnet. Das Dichtelement grenzt an ein Maschinenteil an, wie eine Welle, Kolbe oder Stange. Die dynamischen Dichtungen können Schmierstoffe enthalten. Diese dienen im Aggregat (z.B. Getriebe) zur Schmierung von bewegten Maschinenbauteilen. Dabei kann der Schmierstoff in den Dichtspalt eindringen. Dichtelemente bestehen häufig aus polymeren Werkstoffen wie Thermoplasten oder Elastomeren. Durch die Flexibilität solcher Elastomere können die Dichtelemente bei der Montage und während des Betriebs an den Dichtkörper angepasst werden.

In beweglichen Dichtsystemen wirken erhebliche Kräfte auf die Dichtelemente, die wegen der relativ geringen Härte von Elastomeren bewirken, dass Dichtelemente durch Abrieb verschleißen. Daher haben Dichtelemente oft eine begrenzte Lebensdauer und müssen regelmäßig ausgetauscht werden. Um die Stabilität zu verbessern, werden im Stand der Technik möglichst harte Elastomere eingesetzt, die im Allgemeinen mit Füllstoffen verstärkt werden. Dies hat aber den Nachteil, dass zwar der Verschleiß der Dichtelemente reduziert werden kann, gleichzeitig aber der Dichtkörper durch Abrieb verschlissen wird. Dieser Effekt, der in der Praxis selbst bei Dichtkörpern aus Stahl auftritt, wird als Welleneinlauf bezeichnet, wenn der Gegenlaufpartner des Dichtelements eine Welle ist.

Bei dynamischen Dichtungen kann der Schmierstoff des abzudichtenden Aggregats in den Dichtspalt eindringen. Dadurch können die Schmierstoffe die tribologischen Eigenschaften verbessern und dadurch den Verschleiß mindern. Bei dynamischen Dichtungen mit Schmierstoffen wird der Fachmann vor die besondere Herausforderung gestellt, das Dichtelement, den Dichtkörper und den Schmierstoff so aufeinander abzustimmen, dass gleichzeitig eine gute Abdichtung, gute tribologische Eigenschaften und geringer Verschleiß erhalten werden. Praktisch ist es sehr schwierig oder sogar unmöglich, in einem konkreten Dichtsystem, das hohen Belastungen ausgesetzt ist, den Abrieb sowohl des Dichtelements als auch des Dichtkörpers vollständig zu verhindern oder zumindest gering zu halten. Dabei verhalten sich Dichtsysteme mit Schmierstoffen anders als trockene Systeme.

Um das Problem des Abriebs zu lösen, schlägt die EP 2 291 439 B1 vor, elastomere Dichtelemente mit einer Plasma-Beschichtung auszustatten, die im Wesentlichen aus Kohlenstoff, Sauerstoff, Silizium, Wasserstoff und gegebenenfalls Fluor besteht. Der Silizium- und Sauerstoffanteil ist relativ hoch. Daher ist die Beschichtung glasartig und weist eine relativ hohe Härte auf. Das beschichtete Dichtelement weist daher an der Oberfläche eine hohe Abriebbeständigkeit auf, während im Inneren die für Dichtungsanwendungen gewünschte Flexibilität des Materials erhalten bleiben soll. Allerdings ist nachteilig, dass solche harten Beschichtungen im Allgemeinen einen hohen Verschleiß des Dichtkörpers (Welleneinlauf) verursachen. Der Welleneinlauf ist bei praktischen Anwendungen im Allgemeinen problematischer als ein Verschleiß der Dichtelementen, da die Herstellung und der Austausch von Maschinenteilen im Vergleich oft aufwändiger ist. Auch die Kompatibilität mit verschiedenen Schmierstoffen ist nicht immer gegeben. Insbesondere bei hohen Belastungen ist daher die Stabilität solche Dichtsysteme verbesserungsbedürftig und sie sind für viele Anwendungen ungeeignet. Beim Einsatz sehr harter Beschichtungen besteht zudem die Gefahr, dass das Dichtelement seine Dichtwirkung verliert.

Im Stand der Technik sind auch Verfahren zur Plasma-gestützten chemischen oder physikalischen Gasphasenabscheidung (CVD bzw. PVD) bekannt, um elastomere Substrate mit harten Plasma-Beschichtungen auszustatten, die fast vollständig aus Kohlenstoff bestehen. Solche Beschichtungen werden wegen ihrer Härte und Struktur als "Diamond-like Carbon" (DLC) bezeichnet. Eine Übersicht über solche Verfahren und Produkte wird in Martinez-Martinez, De Hosson, 2014, Surface and Coating Technology 258, 677 bis 690, gegeben. Allerdings sind solche beschichteten Artikel für dynamische Dichtungsanwendungen nicht oder nur begrenzt geeignet, weil in der Praxis wegen der hohen Härte ein relativ starker Abrieb und Verschleiß der Dichtkörper (Welleneinlauf) verursacht wird. Ein solcher Abrieb des Dichtkörpers ist problematisch, weil dieser in der Praxis üblicherweise ein Maschinenteil ist. Durch den Abrieb kann die Funktion der Maschine beeinträchtigt werden. Der Austausch von Maschinenteilen, wie Wellen, ist im Allgemeinen deutlich aufwändiger und teurer als der Austausch von Dichtelementen, wie Dichtringen. Auch ist die Benetzbarkeit solcher Produkte mit Schmierstoffen oft unzureichend. Dies führt dazu, dass die tribologischen Eigenschaften, Verschleiß und Abrieb verbesserungsbedürftig sind. Ferner findet sich in der Literatur kein Hinweis, dass diese Schichtsysteme auch zum Einsatz auf Dichtkörpern geeignet sind, da ein Erhalt der Dichtwirkung nicht thematisiert wurde.

Die tribologischen Eigenschaften von Elastomeren, die mit DLC beschichtet wurden, in trockenen Dichtsystemen werden beispielsweise in Thirumalai, 2016, Surface and Coating Technology 302, 244 bis 254, beschrieben. Dabei wurde wegen der Reibung ein signifikanter Verschleiß verschiedener beschichteter Substrate beobachtet. Dynamische Dichtungen mit Schmierstoffen wurden dabei nicht untersucht.

Die DE 10 2012 010 603B4 betrifft Dichtelemente mit Plasma-Beschichtungen für dynamische Dichtungen in Gegenwart von Schmierstoffen. Bei der Verwendung in geschmierten Dichtsystemen wird ein unerwünschter Welleneinlauf am Dichtkörper erhalten, auch wenn dieser im Vergleich zu unbeschichteten Dichtelementen deutlich reduziert ist. Auch die tribologischen Eigenschaften sind noch verbesserungsbedürftig. Die Beschichtungen weisen Oberflächenenergien von mehr als 50 mN/m auf. Da die Oberflächenenergie ein Maß für die Benetzbarkeit ist, ist die Kompatibilität mit vielen Schmierstoffen ebenfalls verbesserungsbedürftig.

Die Dissertation von Michael Lubwama, "Tribological behaviour of DLC and Si-DLC films deposited on nitrile rubber for handpump piston seals", 2013, Dublin City University, betrifft DLC-Beschichtungen auf elastomeren Dichtelementen aus Nitrilkautschuk, die nur einen geringen Anteil an Silizium aufweisen. Die Dichtelemente werden als Trockendichtungen eingesetzt, um Brunnen gegen Auslaufen von Wasser abzudichten. Anwendungen mit synthetischen Schmierstoffen werden nicht beschrieben.

Insgesamt sind die im Stand der Technik bekannten Dichtelemente und Dichtsysteme also noch verbesserungsbedürftig. Es besteht daher allgemein ein Bedarf nach Dichtsystemen, welche die beschriebenen Nachteile überwinden.

### Aufgabe der Erfindung

Der Erfindung liegt die Aufgabe zugrunde, Dichtsysteme für dynamische Dichtungen bereitzustellen, welche die oben beschriebenen Nachteile überwinden. Der Erfindung liegt insbesondere die Aufgabe zugrunde, Dichtsysteme bereitzustellen, die in Gegenwart von synthetischen Schmierstoffen vorteilhafte Eigenschaften aufweisen, und insbesondere eine hohe Stabilität aufweisen. Die Dichtsysteme sollen dabei gute tribologische Eigenschaften bei dynamischen Dichtungsanwendungen zeigen, insbesondere ein gutes Reibungsverhalten.

Es ist eine weitere Aufgabe der Erfindung, Dichtsysteme bereitzustellen, die in Gegenwart von Schmierstoffen allenfalls einen geringen, bevorzugt aber überhaupt keinen Abrieb des Dichtkörpers (Welleneinlauf) zeigen. Insbesondere sollten über lange Zeiträume stabile und effiziente Dichtsysteme bereitgestellt werden.

Der Erfindung liegt insbesondere die Aufgabe zugrunde, effiziente und stabile Dichtsysteme für die Verwendung mit polaren Schmierstoffen bereitzustellen, wie Polyethern, wie Polyalkylenglykolen, Polyestern oder wasserbasierten Schmierstoffen, und zwar insbesondere bei relativ niedrigen Temperaturen, wie bei Vorrichtungen mit Ölsumpftemperaturen unterhalb 80°C.

### Offenbarung der Erfindung

Überraschenderweise wird die der Erfindung zugrunde liegende Aufgabe gelöst durch Verwendungen, Dichtsysteme, Dichtelemente und Verfahren gemäß den Patentansprüchen. Weitere vorteilhafte Ausführungsformen werden in der Beschreibung offenbart.

Gegenstand der Erfindung ist die Verwendung eines Dichtelements zum dynamischen Abdichten eines Dichtkörpers in Gegenwart eines Schmierstoffs, wobei das Dichtelement einen elastomeren Grundkörper und eine Plasma-Beschichtung aufweist,
wobei die Beschichtung die Elemente Kohlenstoff, Sauerstoff, Silizium, Wasserstoff und gegebenenfalls Fluor aufweist,
wobei die Beschichtung mindestens an der Oberfläche folgende Eigenschaften aufweist:
   das Stoffmengenverhältnis (at%/at%) von C : Si ist > 5
   das Stoffmengenverhältnis (at%/at%) von O : Si ist > 3, und
   die Oberflächenenergie ist < 50 mN/m.

Die Erfindung betrifft ein Dichtsystem (eine Dichtung) mit einem Dichtelement, das mindestens einen Dichtkörper aufweist. Das Dichtsystem ist beispielsweise ein Aggregat, wie ein Getriebe. Der Dichtkörper ist üblicherweise ein Maschinenteil. Das Dichtelement und der Dichtkörper bilden eine Grenzfläche, die in der Dichtungstechnik als Dichtspalt bezeichnet wird. Das Dichtsystem ist eine dynamische Dichtung, bei der sich das Dichtelement und der Dichtkörper bei der bestimmungsgemäßen Verwendung relativ zueinander bewegen. Dabei werden bevorzugt Schmierstoffe eingesetzt. Diese können bei der Verwendung in den Dichtspalt eindringen, wodurch die tribologischen Eigenschaften verbessert werden. Der Begriff "Tribologie" (Reibungslehre) bezeichnet die Lehre der Reibung, also insbesondere die Lehre der Berechnung und Messung von Reibungskoeffizienten, dem Verschleiß und der Schmierung zwischen aufeinander einwirkenden, zueinander in Bewegung stehenden Körpern und Oberflächen.

Bei dynamischen Dichtungen dienen solche Dichtsysteme im Wesentlichen dazu, das Zusammenspiel verschiedener Maschinenteile zu gewährleisten. Solche Dichtsysteme sollen gute tribologische Eigenschaften aufweisen und einen geringen Verschleiß aufweisen. Zur Verbesserung dieser Eigenschaften werden regelmäßig Schmierstoffe eingesetzt, wie Öle und Fette. Die Schmierstoffe können zusätzlich auch dazu dienen, die Dichtsysteme gegen Fluide abzudichten.

Das Dichtelement weist einen elastomeren Grundkörper als Substrat und eine darauf aufgetragene Plasma-Beschichtung auf. Bevorzugt ist die Beschichtung unmittelbar auf dem Grundkörper aufgetragen. Es kann aber auch eine weitere Zwischenschicht vorhanden sein, beispielsweise um die Haftung zu verbessern. Der elastomere Grundkörper weist dabei bevorzugt ein elastomeres Polymer auf oder besteht daraus. Der Grundkörper kann dabei ganz oder teilweise beschichtet sein. Die Plasma-Beschichtung ist mindestens auf dem Teil des Grundkörpers vorhanden, die den Dichtspalt in dem Dichtsystem ausbildet.

Der Grundkörper ist mit einer Plasma-Beschichtung ausgestattet. Die Plasma-Beschichtung wird bevorzugt mit einem Verfahren der Plasma-unterstützten chemischen Gasphasenabscheidung (PE-CVD) hergestellt. Dabei wird der Grundkörper in eine PE-CVD-Vorrichtung (Plasmavorrichtung) gegeben, in die volatile, also gas- oder dampfförmige, Vorläuferverbindungen für die Beschichtung (Precursor, Monomere) eingeführt werden. Im Plasma wird die Vorläuferverbindung chemisch und physikalisch verändert und es entstehen reaktive Zwischenprodukte und Polymere, die sich auf der Oberfläche des Grundkörpers ablagern. Plasma-Beschichtungen bilden im Allgemeinen eine dreidimensionale vernetzte Struktur aus. Sie werden daher oft auch als plasmapolymere Beschichtungen bezeichnet. Es ist auch möglich, die Beschichtung durch eine Plasma-gestützte physikalische Gasphasenabscheidung herzustellen (PVD).

Die Beschichtung enthält die Elemente Kohlenstoff, Sauerstoff, Silizium, Wasserstoff und gegebenenfalls Fluor. Dies bedeutet, dass diese Polymermoleküle aus mindestens diesen Elementen aufgebaut sind. Bevorzugt besteht die Beschichtung dabei aus Kohlenstoff, Sauerstoff, Silizium, Wasserstoff und gegebenenfalls Fluor. In einer bevorzugten Ausführungsform ist Fluor enthalten. In einer weiteren Ausführungsform ist Stickstoff enthalten, beispielsweise in einem Anteil von bis zu 10 at% oder bis zu 5 at%. Allgemein können geringfügige, unvermeidliche Verunreinigungen weiterer Elemente vorhanden sein, beispielsweise in einer Menge von < 5 at%, < 2 at% oder < 1 at%. Solche Verunreinigungen entstehen unter anderem, wenn Bestandteile des Grundkörpers in reaktivem Plasma in die Plasmaphase übergehen und in die Beschichtung eingebaut oder eingelagert werden. Typische Verunreinigungen sind beispielsweise Metalle, wie Natrium oder Zink.

Die Beschichtungen sind erfindungsgemäß unter anderem dadurch charakterisiert, dass sie relativ viel Kohlenstoff und nur einen kleinen Anteil Silizium enthalten. Die Beschichtung weist mindestens an der Oberfläche ein Stoffmengenverhältnis (at%/at%) von C : Si von > 5 und ein Stoffmengenverhältnis (at%/at%) von O : Si von > 3 auf.

Im Rahmen dieser Anmeldung werden Stoffmengen und Stoffmengenanteile der Beschichtung in Atomprozent (at%) angegeben, soweit nicht ausdrücklich anders angegeben. Die Stoffmengen an der Oberfläche der Beschichtung werden mittels Röntgen-Photoelektronen-Spektroskopie (ESCA, Electron Spectroscopy for Chemical Analysis; auch bezeichnet als XPS, X-Ray Photoelektron Spectroscopy) ermittelt. Mit diesem im Stand der Technik üblichen Verfahren wird die Stoffmengenzusammensetzung an der Oberfläche bis zu einer Tiefe von wenigen Nanometern ermittelt. Bevorzugt wird die Zusammensetzung an der Oberfläche in den oberen 1 bis 20 nm, insbesondere in den oberen 2 bis 10 nm, oder etwa in den oberen 4 oder 5 nm gemessen. Die Methode erlaubt die Detektion aller chemischen Elemente mit Ausnahme von Wasserstoff.

In einer bevorzugten Ausführungsform weist die Beschichtung insgesamt ein Stoffmengenverhältnis (at%/at%) von C : Si > 5 und ein Stoffmengenverhältnis (at%/at%) von O:Si > 3 auf. Dies bedeutet, dass die Beschichtung im Mittel diese Stoffmengenverhältnisse aufweist. Bevorzugt weist dabei die Beschichtung ein solches Stoffmengenverhältnis überall auf, oder zumindest in Bereichen, die >80, >90 oder >95 % der Beschichtung ausmachen, und/oder ihres Querschnittes. In einer bevorzugten Ausführungsform ist die Zusammensetzung der Beschichtung im Wesentlichen homogen. Gleichmäßige Beschichtungen werden hergestellt, indem die Art und Konzentration der gasförmigen Vorläuferverbindungen während des Beschichtungsprozesses konstant gehalten werden. Dies schließt nicht aus, dass beispielsweise zu Beginn des Verfahrens eine kurze Vorbehandlung mit einem anderen Prozessgas stattfindet, beispielsweise um die Oberfläche des Grundkörpers zu reinigen und/oder zu aktivieren und/oder um die Anhaftung an den Grundkörper an der Grenzfläche zu verbessern. Wie dem Fachmann bekannt ist, kann die Zusammensetzung der Oberfläche insbesondere an der Grenzfläche zu dem Grundkörper etwas variieren, weil zu Beginn des

Herstellungsverfahrens der Plasma-Beschichtung auch eine Reaktion mit dem Grundkörper und dessen aktivierten Bestandteilen stattfinden kann.

Es ist erfindungsgemäß auch möglich, dass die Beschichtung verschiedene Teilschichten mit unterschiedlicher Stoffmengenzusammensetzung aufweist und/oder dass die Beschichtung einen Gradientenaufbau aufweist. Solche Beschichtungen mit nicht homogener Zusammensetzung können hergestellt werden, indem bei der Plasma-Beschichtung die Art und/oder die Konzentration der Vorläuferverbindungen variiert werden.

Die nachfolgend offenbarten bevorzugten Stoffmengenzusammensetzungen können jeweils entweder nur an der Oberfläche der Beschichtung oder in der gesamten Beschichtung eingestellt werden. Erfindungsgemäß ist dabei wesentlich, dass eine vorteilhafte Zusammensetzung an der Oberfläche der Beschichtung eingestellt wird, wo sie in Kontakt mit dem Schmierstoff steht und den Dichtspalt ausbildet.

In einer bevorzugten Ausführungsform ist das Stoffmengenverhältnis (at%/at%) C : Si > 10 oder > 20, bevorzugt < 80 oder < 70. Bevorzugt ist das Stoffmengenverhältnis (at%/at%) C : Si im Bereich von 5 bis 80, bevorzugt von 10 bis 70 oder von 25 bis 70.

Bevorzugt ist das Stoffmengenverhältnis (at%/at%) O : Si > 4 oder ≥ 5. Bevorzugt ist es < 20 oder < 15. Insbesondere liegt es im Bereich von 3 bis 20, bevorzugt von 4 bis 15.

Bevorzugt ist das Stoffmengenverhältnis (at%/at%) C : O > 3, besonders bevorzugt >4. Es ist bevorzugt < 12, insbesondere < 10. Insbesondere liegt das Verhältnis von 3 bis 12, insbesondere von 4 bis 10.

In einer bevorzugten Ausführungsform ist das Stoffmengenverhältnis (at%/at%) C : Si von 10 bis 80, das Verhältnis O : Si von 4 bis 15, und das Verhältnis C:O ist von 3 bis 12.

In einer bevorzugten Ausführungsform ist der Stoffmengenanteil von Si von 0,5 at% bis 5 at%, bevorzugt von 1 at% bis 5 at% oder von 1 at% bis 4 at%. Überraschenderweise wurde gefunden, dass selbst ein solcher geringer Anteil, der gezielt in die polymere Beschichtung eingebaut wird, eine signifikante Verbesserung der Eigenschaften erreichen kann.

Die Beschichtungen bestehen maßgeblich aus Kohlenstoff, bevorzugt in einem Stoffmengenanteil von mindestens 50 at%, bevorzugt mehr als 60 at%, bevorzugt in einem Stoffmengenanteil von 50 at% bis 95 at%, insbesondere zwischen mehr als 60 at% und 90 at%. Der Anteil an Sauerstoff ist bevorzugt 5 at% bis 25 at%, insbesondere 9 at% bis 18 at%. Der Anteil an Fluor kann bis zu 35 at%, insbesondere bis zu 25 at%, betragen. Sofern Fluor vorhanden ist, liegt die Stoffmengenanteil bevorzugt zwischen 5 at% und 35 at%, insbesondere zwischen 7 at% und 25 at%.

In einer bevorzugten Ausführungsform weist die Beschichtung folgende Stoffmengenanteile (at%) auf:

| | |
|---|---|
| Kohlenstoff: | 50% bis 95%, bevorzugt >60% bis 90% |
| Sauerstoff: | 5% bis 25%, bevorzugt 9% bis 18% |
| Silizium: | 0,5% bis 5%, bevorzugt 1% bis 4% |
| Fluor: | 0% bis 35%, bevorzugt 0% bis 25% |

Die Beschichtungen sind insgesamt dadurch charakterisiert, dass sie nur einen relativ geringen Anteil an Silizium und Sauerstoff enthalten. Die Beschichtungen unterscheiden sich dadurch von herkömmlichen Beschichtungen, die entweder im wesentlichen Kohlenstoff und kein Silizium enthalten ("DLC-Beschichtungen"), oder die einen relativ hohen Anteil an Silizium und Sauerstoff von 20 - 25 at% enthalten und dadurch glasartig sind ("SiOₓ-Beschichtungen"). Beschichtungen der DLC-Klasse zeichnen sich durch eine hohe Härte aus. Sie können beispielsweise aus Acetylen oder Methan als Vorläuferverbindung hergestellt werden. Eine Übersicht über die Herstellung und die Eigenschaften von DLC-Beschichtungen auf Elastomeren wird in Martinez-Martinez (siehe oben) gegeben.

Es wurde gefunden, dass sich die Eigenschaften der erfindungsgemäßen Beschichtungen bei Dichtungsanwendungen signifikant von denen von kohlenstoffreichen Beschichtungen ohne Silizium unterscheiden. So zeigen die erfindungsgemäßen Beschichtungen beispielsweise eine andere Benetzbarkeit und Oberflächenenergie, was in Gegenwart von Schmierstoffen von Bedeutung ist. Obwohl die erfindungsgemäßen Beschichtungen einen relativ hohen Kohlenstoffanteil aufweisen, ist anzunehmen, dass die Einarbeitung von Silizium aus Vorläuferverbindungen in kleinen Mengenanteilen in Verbindung mit Sauerstoff zu einer Struktur führt, die sich signifikant von der von bekannten kohlenstoffreichen Beschichtungen unterscheidet.

Unter anderem wegen dem relativ niedrigen Anteil an Silizium unterscheiden sich die Beschichtungen auch signifikant von bekannten Beschichtungen, die einen hohen Anteil an Silizium und Sauerstoff aufweisen. Solche Beschichtungen sind glasartig und weisen eine relativ hohe Härte auf. Sie werden in der EP 2 291 439 B1 beschrieben.

Erfindungsgemäß ist die Beschichtung in einem PECVD-Verfahren erhältlich, bei dem eine volatile, also gas- oder dampfförmige, Silizium-Vorläuferverbindung eingesetzt wird. Die Zusammensetzung der Beschichtung wird bei PECVD-Verfahren über die Auswahl und Mengen der gasförmigen Vorläuferverbindungen eingestellt. Dabei wird mindestens eine Vorläuferverbindung eingesetzt, die Silizium enthält. Besonders bevorzugt wird eine Verbindung eingesetzt, die aus Silizium, Kohlenstoff und Wasserstoff besteht. Diese ist insbesondere ein Alkylsilan, bevorzugt ein Tetraalkylsilan, besonders bevorzugt Tetramethylsilan (TMS).

Allgemein werden bevorzugt Vorläuferverbindungen eingesetzt, die mindestens Silizium, Kohlenstoff und/oder Sauerstoff enthalten. Damit ein niedriger Siliziumanteil erreicht wird, wird erfindungsgemäß bevorzugt eine weitere Vorläuferverbindung eingesetzt, die kein Silizium enthält, und die insbesondere eine Kohlenstoff-Vorläuferverbindung ist. Insbesondere wird dabei mindestens eine Verbindung eingesetzt, die aus Kohlenstoff und Wasserstoff besteht, besonders bevorzugt Methan, Ethylen oder Acetylen (Ethin, C₂H₂). Insbesondere wird ein Gemisch aus Acetylen und TMS eingesetzt. Um den erforderlichen niedrigen Siliziumanteil zu erhalten, wird üblicherweise die Verbindung, die kein Silizium enthält, im deutlichen Überschuss eingesetzt, beispielsweise im Gewichtsverhältnis von mindestens 10:1. Die genauen Konzentrationen und Bedingungen werden im Hinblick auf die konkreten Verbindungen, die Plasmavorrichtung und die gewünschte Schichtzusammensetzung eingestellt.

Im Stand der Technik ist bekannt, dass im reaktiven Plasma auch Bestandteile des Grundkörpers aktiviert werden können. Diese können als reaktive Verbindungen in die Gasphase freigesetzt werden und in die Beschichtung übergehen. Dieses Phänomen tritt vor allem zu Beginn des Verfahrens auf, wenn die Oberfläche des Grundkörpers noch unbeschichtet und dadurch ungeschützt ist. Daher wird in der Praxis oft beobachtet, dass eine Plasma-Beschichtung gerade im Grenzbereich zum Substrat eine etwas unterschiedliche Zusammensetzung aufweist. Dies ist erfindungsgemäß aber unbeachtlich, da entscheidend ist, dass die Beschichtung die gewünschte vorteilhafte Zusammensetzung an der Oberfläche aufweist.

Die Beschichtung ist auf einen elastomeren Grundkörper aufgetragen. Der Hauptbestandteil des Grundkörpers ist mindestens ein organisches Polymer, das auch ein Silizium-organisches oder Fluor-Polymer sein kann. Das Polymer ist ein Elastomer, das eine dreidimensional vernetzte Matrix bildet. Das Elastomer verleiht dem Grundkörper Elastizität und Flexibilität, die bei der Montage und bestimmungsgemäßen Anwendung der Dichtungselemente vorteilhaft sind.

Bevorzugte elastomere Grundkörper sind ausgewählt aus Fluorelastomeren (FKM, FFKM), EPDM (Ethylen-Propylen-Dien-Elastomer), Nitril-Butadien-Elastomeren (NBR), hydrierten Nitril-Butadien-Elastomeren (HNBR). Silikonen, NR (Naturgummi), Polyacrylat-Elastomeren (ACM), CR (Chloropren-Elastomer), IIR (Isobuten-Isopren-Elastomer), AU (Polyester-Urethan), EU (Polyether-Urethan), MQ (Methylen-Silikon-Elastomer), VMQ (Vinyl-Methyl-Silikon-Elastomer), PMQ (Phenyl-Methyl-Silikon-Elastomer), FMQ (Fluor-Methyl-Silikon-Elastomer), FEPM (Tetrafluorethylen-Propylen-Elastomer), oder Mischungen solcher Elastomere. In einer bevorzugten Ausführungsform der Erfindung umfasst der elastomere Grundkörper mindestens ein Polymer, ausgewählt aus Fluorelastomeren (FKM, FFKM), EPDM (Ethylen-Propylen-Dien-Elastomer), Nitril-Butadien-Elastomeren (NBR) und hydrierten Nitril-Butadien-Elastomeren (HNBR).

Bevorzugt besteht der Grundkörper zu mindestens 40 Gew.%, mindestens 50 Gew.% oder mindestens 60 Gew.% aus mindestens einem solchen Polymer. Dabei kann der Grundkörper übliche Zusätze enthalten, wie Füllstoffe, die organisch oder anorganisch sein können, Farbstoffe, Stabilisatoren oder Weichmacher. Elastomere für Dichtungsanwendungen enthalten oft Füllstoffe, um die Härte und Stabilität zu verbessern.

In einer bevorzugten Ausführungsform ist der elastomere Grundkörper ein Fluorelastomer. Damit werden allgemein organische Polymere bezeichnet, die Fluor enthalten. Bevorzugt ist das Fluorelastomer ein Fluorkautschuk (FKM) oder ein Perfluorkautschuk (FFKM). Fluorkautschuke (FKM) werden durch Polymerisation unter Verwendung von Vinyliden(di)fluorid (VDF) hergestellt, wobei zusätzlich andere Monomere, wie Hexafluorpropylen (HFP) oder Tetrafluorethylen (TFE) eingesetzt werden können. Geeignete FKM sind beispielsweise Copolymere von Vinylidenfluorid (VDF) und Hexafluorpropylen (HFP) und Terpolymere von VDF, HFP und Tetrafluorethylen (TFE). Insbesondere bevorzugt sind FKM gemäß der Definition von DIN ISO 1629 oder ASTM D1418. Weitere geeignete fluorierte Elastomere sind Tetrafluorethylen/Propylen-Kautschuke (FEPM) und fluorierter Silikonkautschuk. In einer bevorzugten Ausführungsform ist das Fluorelastomer quervernetzt. Solche quervernetzten Fluorelastomere und ihre Herstellung werden beispielsweise in der EP 1 953 190 B1 beschrieben.

In einer bevorzugten Ausführungsform besteht das Fluorelastomer im Wesentlichen aus Kohlenstoff und Fluor. Dabei ist es möglich, dass ein kleiner Anteil auch aus anderen Elementen besteht, beispielsweise weil bei der Polymerisation Additive eingesetzt werden, die nicht aus Fluor und Kohlenstoff bestehen, wie Quervernetzer. In bevorzugten Ausführungsformen besteht daher das Fluorelastomer zu mehr als 90 Gew.%, zu mehr als 95 Gew% oder zu mehr als 98 Gew. % aus Kohlenstoff und Fluor.

Bevorzugt ist/sind der Grundkörper und/oder das Dichtelement ein Dichtring, eine Rotationsdichtung oder Kassettendichtung. Der Dichtring ist insbesondere ein Wellendichtring. Bevorzugte Dichtelemente für dynamische Dichtungen sind beispielsweise Gleitringdichtungen, Radialwellendichtringe, Labyrinthwellendichtungen, Stangendichtungen, O- oder Kolbenringe. Solche Dichtelemente dichten Maschinengehäuse an austretenden Elementen, wie Wellen oder Schubstangen, gegen die Umgebung ab. In einer besonders bevorzugten Ausführungsform ist das Dichtelement ein Radialwellendichtring (RWDR). Radialwellendichtringe sind insbesondere solche, die in der DIN3760 definiert werden. In einer bevorzugten Ausführungsform ist der Dichtring ein Axialwellendichtring. Solche Dichtringe sind in hohem Maße starken Kräften bei dynamischen Dichtungsanwendungen ausgesetzt, die in Kombination mit Schmierstoffen zu hohem Verschleiß der Dichtelemente und zu hohem Welleneinlauf führen können.

Der elastomere Grundkörper ist mindestens teilweise mit einer Beschichtung ausgestattet. In einer Ausführungsform der Erfindung ist der elastomere Grundkörper vollständig mit der Beschichtung versehen. In einer bevorzugten Ausführungsform sind lediglich Teilbereiche des Grundkörpers beschichtet. Die beschichteten Teilbereiche können beispielsweise 5 bis 90%, insbesondere 10 bis 60% der Oberfläche des Grundkörpers ausmachen. Entscheidend ist dabei, dass der Dichtspalt, die Kontaktfläche zum Dichtkörper und/oder bevorzugt auch die angrenzenden Bereiche des Grundkörpers beschichtet sind.

Die Beschichtung weist bevorzugt eine Schichtdicke im Nanometerbereich auf. Beispielsweise liegt die Schichtdicke zwischen 5 und 3000 nm, insbesondere zwischen 100 und 1500 nm.

Die Beschichtung weist eine relativ niedrige Oberflächenenergie von < 50 mN/m auf, bevorzugt < 45 mN/m oder < 40 mN/m. Die Oberflächenenergie ist dabei bevorzugt > 20 mN/m, insbesondere > 25 mN/m oder > 30 mN/m. Es ist bevorzugt, dass die Oberflächenenergie im Bereich von 20 bis 50 mN/m, insbesondere im Bereich von 25 bis 45 mN/m oder von 30 bis 40 mN/m liegt.

Die Oberflächenenergie (Oberflächenspannung) ist die gesamte potenzielle Energie der Moleküle, die sich an oder nahe der Oberfläche eines Feststoffs befinden. In einem Festkörper wirken Anziehungskräfte zwischen den Molekülen, die diesen zusammenhalten. Auf Moleküle an der Oberfläche wirken diese Kräfte nicht von allen Seiten, sondern nur vom Innern her. Es resultiert eine Zugkraft, welche auf an der Oberfläche befindliche Moleküle nach Innen hin wirkt. Um ein Molekül aus dem Innern an die Oberfläche zu bringen, ist daher Arbeit zu leisten und Moleküle an der Oberfläche besitzen eine entsprechende potenzielle Energie. Die Oberflächenenergie ist ein charakteristischer Wert für die Wechselwirkung der Oberfläche einer kondensierten Phase (Feststoff oder Flüssigkeit) mit ihrer Umgebung. Sie wird in mN/m angegeben. Die Oberflächenenergie ist ein Kriterium für die Benetzbarkeit eines Materials. Sie kann durch verschiedene Plasmaverfahren erhöht werden. Die Oberflächenenergien von Feststoffen betragen von unter 20 mN/m (z. B. PTFE) bis einige tausend mN/m (Metalle, Diamant).

Die Oberflächenenergie einer Beschichtung kann bei der Herstellung im Plasma durch verschiedene Maßnahmen gezielt beeinflusst werden. So wird die Oberflächenenergie durch die Veränderung des Anteils sauerstoffhaltiger Gase, die gewählte Gesamtgasmenge, die Leistung oder die Nachaktivierung der Oberfläche, beispielsweise durch Variation der Bestandteile im Plasma, beeinflusst. Eine geeignete Maßnahme zur Erhöhung der Oberflächenenergie ist die Verwendung von Prozessgasen, die polare Atome enthalten, wie Stickstoff oder Sauerstoff. Erfindungsgemäß kann die relativ niedrige Oberflächenenergie von <50 mN/m beispielsweise erhalten werden, wenn die Beschichtung einen relativ kleinen Anteil Silicium, einen relativ hohen Kohlenstoffanteil und einen relativ niedrigen Sauerstoffanteil aufweist.

Die Messung der Oberflächenenergie erfolgt indirekt über den Kontaktwinkel, der zwischen dem Festkörper und einer Flüssigkeit mit bekannter Oberflächenspannung an der Phasengrenze ausgebildet wird. Die Youngsche Gleichung beschreibt die Beziehung zwischen dem Kontaktwinkel, der Oberflächenspannung der Flüssigkeit, der Grenzflächenspannung zwischen beiden Phasen und der Oberflächenenergie des Festkörpers. Erfindungsgemäß wird die Oberflächenenergie gemäß der Methode der statischen Kontaktwinkelmessung mit Wasser und Diiodmethan als polare bzw. unpolare Flüssigkeit gemessen. Die Auswertung der Kontaktwinkelmessungen erfolgt nach der Gleichung von Owens und Wendt. Zur Bestimmung ist insbesondere die DIN 55660-2 geeignet (Dezember 2011; Beschichtungsstoffe-Benetzbarkeit - Teil 2: Bestimmung der freien Oberflächenenergie fester Oberflächen durch Messung des Kontaktwinkels).

Das Dichtelement grenzt an einen Dichtkörper an. Der Dichtkörper ist insbesondere ein für Dichtungsanwendungen übliches Maschinenteil, beispielsweise eine Welle. Solche Dichtkörper bestehen häufig aus Metall, beispielsweise aus Stahl. Im Gebiet der Dichtungstechnik ist bekannt, dass der Welleneinlauf, also der Abrieb des Dichtkörpers, der bis hin zur Leckage des Gesamtsystems oder Zerstörung des Dichtkörpers führen kann, ein großes praktisches Problem darstellt. Der Abrieb wird dadurch verursacht, dass die Dichtelemente im Allgemeinen ebenfalls eine relativ hohe Härte aufweisen, um nicht selbst zu stark abgerieben oder zerstört zu werden. Die Härte von elastomeren Dichtelementen wird dabei im Stand der Technik regelmäßig durch Einarbeitung von Füllstoffen erhöht. Mit Leckage wird insbesondere das unerwünschte Austreten des Schmierstoffs aus dem Dichtsystem bezeichnet.

Die erfindungsgemäße Verwendung erfolgt in Gegenwart eines Schmierstoffs. Als Schmierstoff werden Materialien bezeichnet, die in einem Dichtsystem die Reibung oder den Verschleiß verringern. Dabei wird das Dichtelement im Bereich des Dichtspalts von dem Schmierstoff benetzt, wobei die Benetzung insbesondere auf der sogenannten Ölseite erfolgt. Der Schmierstoff dient vor allem zur Verringerung von Reibung und Verschleiß und dadurch zu einer Verlängerung der Lebensdauer des Dichtungssystems.

Schmierstoffe sind unter Betriebsbedingungen flüssig oder schmierfähig. Es handelt sich im allgemeinen um organische Stoffe oder Stoffgemische. Übliche Schmierstoffe sind beispielsweise Fette oder Öle. Bevorzugt ist der Schmierstoff ausgewählt aus organischen Schmierölen, insbesondere synthetischen Schmierölen. Das erfindungsgemäße Dichtelement eignet sich wegen der niedrigen Oberflächenenergie sowohl zur Dichtung in Gegenwart von polaren auch von oleophilen Schmierstoffen. Allgemein kann der Schmierstoff polar oder oleophil (mit Ölen mischbar) sein. Geeignete Schmierstoffe enthalten oder sind beispielsweise Polyether, Polyester, wasserbasierte Schmierstoffe, Silikonöle oder Polyalphaolefine. Wasserbasierte Schmierstoffe enthalten Wasser und organische Verbindungen, wie Polyether, Polyester und/oder Tenside, bevorzugt in einem Anteil von 5 Gew.% oder mehr. Sie werden beispielsweise in der EP 2 473 587 B1 beschrieben.

Besonders bevorzugt ist der Einsatz von polaren Schmierölen. Bevorzugt ist die Polarität höher als die von Mineralölen. Insbesondere ist der Schmierstoff bevorzugt hydrophil, also mit Wasser mischbar oder teilweise mischbar. Polare Schmieröle weisen polare Gruppen auf, insbesondere Sauerstoff-haltige Gruppen wie Hydroxygruppen, Ethergruppen oder Estergruppen. Bevorzugt ist der Schmierstoff ein Polyether, Polyester, oder ein Gemisch davon.

Besonders bevorzugt sind die Schmiermittel Polyalkylenglykole. Diese werden hergestellt durch Polymerisation von Alkylenoxideinheiten, und zwar üblicherweise Ethylenoxid- oder Propylenoxideinheiten oder Kombinationen daraus, gestartet durch Anlagerung an einen Alkohol. Dabei entscheidet der Anteil an Ethylenoxid über die Löslichkeit in Wasser. Besonders bevorzugt wird ein Polypropylenglykol eingesetzt. Verschiedene Polyalkylenglykole sind unter der Markenbezeichnung "Polyglykol" kommerziell erhältlich. Polyalkylenglykole zeigen ein hohes Potential zur Reibungsminimierung in Verzahnungen und hohe Temperaturbeständigkeiten. Geeignete Polyglykol-Öle sind kommerziell erhältlich, beispielsweise unter der Markenbezeichnung Klübersynth GH 6, oder Klübersynth UH1 6-460, von Klüber Lubrication, DE. Es wurde gefunden, dass polare Schmieröle, insbesondere Polyalkylenglykole, in besonderem Maße mit den erfindungsgemäßen Dichtsystemen kompatibel sind.

In einer bevorzugten Ausführungsform ist der Kontaktwinkel der Beschichtung gegenüber dem Schmierstoff kleiner 50°, kleiner 40° oder kleiner 30°, bevorzugt von 10° bis kleiner 50°, noch mehr bevorzugt zwischen 15° bis 30°. Bei solchen relativ niedrigen Kontaktwinkeln kann die Beschichtung gut mit dem Schmierstoff benetzt werden. Es wurde gefunden, dass polare Schmieröle und insbesondere Polyalkylenglykole, mit den erfindungsgemäßen Dichtelementen solche Kontaktwinkel aufweisen, was zu einem effizienten, abriebarmen Dichtsystem führt. Der Kontaktwinkel wird bevorzugt bei Raumtemperatur im Gleichgewichtszustand gemäß DIN 55660-2 (Dezember 2011) ermittelt.

Die Schmierstoffe weisen eine Oberflächenspannung von 10 - 70 mN/m, bevorzugt 15 - 60 mN/m oder 20 - 40 mN/m auf. Bestimmung der Oberflächenspannung nach der Methode am hängenden Tropfen gemäß DIN 55660-3 (Dezember 2011).

Das erfindungsgemäße System ist besonders geeignet bei Verwendung von Schmierstoffen, die eine relativ hohe Viskosität aufweisen. In einer bevorzugten Ausführungsform weist der Schmierstoff daher eine kinematische Viskosität > 150 mm²/s, bevorzugt > 250 mm²/s oder > 400 mm²/s auf. Die kinematische Viskosität wird bei 40°C nach ISO 3104/ASTM D445 gemessen.

Die Verwendung erfolgt bevorzugt bei einer Ölsumpftemperatur < 80°C, insbesondere < 60°C oder < 40 °C. Damit wird die Temperatur bezeichnet, bei der das Öl in der Gesamtvorrichtung am tiefsten Punkt zusammenfließt und gespeichert wird (Ölwanne, Ölsumpf). In dem dynamischen Dichtsystem selbst können lokal deutlich höhere Temperaturen vorliegen, die durch die Reibungswärme der Komponenten verursacht wird.

Die Verwendung mit solchen hochviskosen Schmierstoffen und/oder bei relativ niedrigen Temperaturen < 80°C sind besonders vorteilhaft. Erfindungsgemäß wurde gefunden, dass gerade unter solchen Bedingungen, insbesondere bei Verwendung von synthetischen hydrophilen Ölen wie Polyalkylenglykolen, ein besonders stabiles Dichtsystem erhalten wird, das äußerst verschleißarm ist. Dies gilt insbesondere in Kombination mit Dichtelementen auf Basis von Fluorelastomeren. Bei solchen Dichtsystemen wurde gefunden, dass der Welleneinlauf nicht nur verringert, sondern sogar vollständig verhindert werden kann. Dies ist besonders vorteilhaft, da im Stand der Technik unter vergleichbaren Bedingungen im Allgemeinen ein relativ starker Verschleiß des Dichtelements und/oder ein relativ starker Welleneinlauf des Dichtkörpers beobachtet werden.

Erfindungsgemäß wurde überraschenderweise gefunden, dass das Dichtelement in einem dynamischen Dichtsystem eine besonders vorteilhafte Kombination von Eigenschaften aufweist. Im Stand der Technik wird allgemein davon ausgegangen, dass Dichtelemente für dynamische Dichtungsanwendungen relativ hart sein müssen, um eine Schädigung des Dichtelements durch Abrieb zu verhindern. So wurden gemäß der

EP 2 291 439 B1 vorgeschlagen, Dichtelemente mit glasartigen Beschichtungen mit hohem Silizium- und Sauerstoffanteil auszustatten. Außerdem wurden im Stand der Technik harte Beschichtungen mit hohem Kohlenstoffanteil vorgeschlagen (DLC). Bei solchen Beschichtungen ist jedoch nachteilig, dass in der Praxis zwar der Abrieb des Dichtelements verringert werden kann, dafür aber der Dichtkörper selbst durch Abrieb beeinträchtigt wird. Dadurch wird bei Wellenanwendungen ein unerwünschter Welleneinlauf am Dichtkörper beobachtet.

Das erfindungsgemäße Dichtsystem weist ausgezeichnete tribologische Eigenschaften auf. Gleichzeitig kann der Abrieb des Dichtkörpers stark reduziert und oft sogar völlig verhindert werden kann. Das Dichtsystem ist insbesondere geeignet für dynamische Dichtungsanwendungen in Gegenwart von synthetischen Schmierstoffen. So kann bei dynamischen Dichtungen von Wellen der Welleneinlauf weitgehend oder sogar vollständig vermieden werden.

Gegenstand der Erfindung ist auch ein Dichtsystem (eine Dichtung), umfassend das Dichtelement, einen Dichtkörper, einen dazwischen liegenden dynamischen Dichtspalt und gegebenenfalls einen Schmierstoff. Das Dichtsystem ist bevorzugt eine dynamische Dichtung.

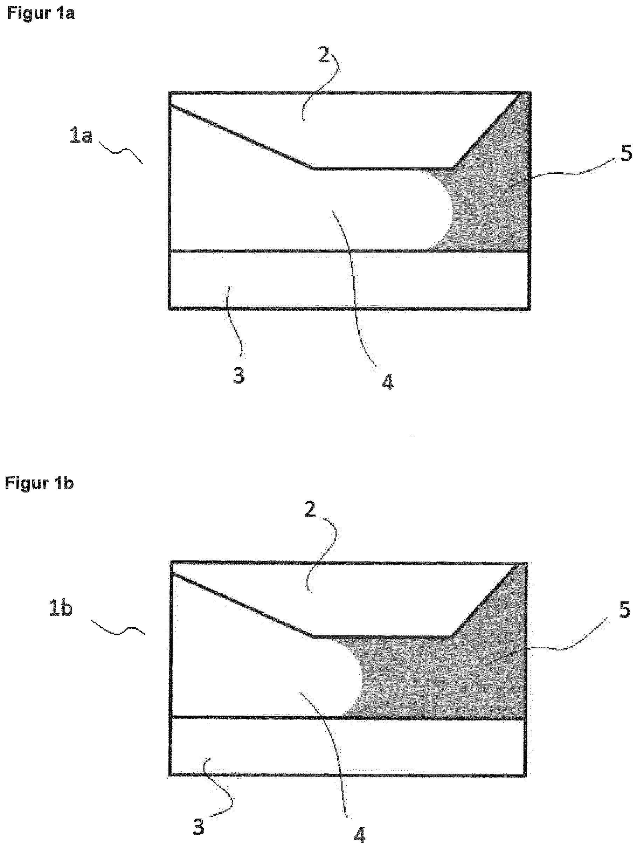

Figur 1 zeigt schematisch und beispielhaft Dichtsysteme 1a, 1b aus einem Dichtelement 2 und einem Dichtkörper 3, die einen Dichtspalt 4 bilden, sowie einem Schmierstoff 5. Auf der linken Seite ist ein herkömmliches System 1a gezeigt, bei dem der Schmierstoff 5 den Dichtspalts 4 nicht vollständig ausfüllt, weil die Benetzbarkeit unzureichend ist. Mit der erfindungsgemäßen Beschichtung kann ein Dichtsystem 1b erhalten werden, wie auf der rechten Seite dargestellt, bei dem der Dichtspalt 4 vollständig mit Schmierstoff 5 befüllt ist, das heißt bei dem im Dichtspalt 4 das Dichtelement 2 und der Dichtkörper 3 vollständig benetzt sind.

Gegenstand der Erfindung ist auch eine Vorrichtung, umfassend eine zu dichtende Einrichtung, welche das dynamische Dichtsystem (die Dichtung) enthält. In einer bevorzugten Ausführungsform ist die Vorrichtung ein Getriebe, eine Pumpe, ein Motor oder ein Kraftfahrzeugs.

Gegenstand der Erfindung ist auch ein Verfahren zum dynamischen Abdichten eines Dichtkörpers mit einem erfindungsgemäßen dynamischen Dichtsystem, wobei der Dichtkörper und das Dichtelement dynamisch zueinander bewegt werden.

Bei dem erfindungsgemäßen Verfahren wird ein Dichtsystem aus dem Dichtkörper, dem Dichtelement und dem Schmierstoff bereitgestellt. Der Dichtkörper und das Dichtelement werden relativ zueinander bewegt. Dabei wurde beobachtet, dass das Dichtsystem über längere Zeiträume stabil ist. Dabei ist es nicht nachteilig, wenn in der Anfangsphase ein geringfügiger Abrieb des Dichtelements erfolgt. Es wird ein System erhalten wird, das über einen langen Zeitraum stabil betrieben werden kann. So wurde beispielsweise gefunden, dass ein geringfügiger Abrieb des Dichtelements innerhalb von weniger als 96 Stunden erfolgen kann, während in einer sich anschließenden längeren Phase von bis zu 1000 Stunden kein weiterer signifikanter Abrieb erfolgt. Außerdem wurde beobachtet, dass während des 1000-stündigen Betriebs kein Verschleiß der Welle als Dichtkörper, also kein Welleneinlauf, beobachtet wurde. Der Effekt war bei hochviskosen Schmierstoffen und relativ niedrigen Temperaturen besonders ausgeprägt. Insgesamt wird ein System bereitgestellt, das sich mit zunehmender Betriebsdauer stabilisiert und dauerhaft gute tribologische Eigenschaften aufweist.

Gegenstand der Erfindung ist auch ein Dichtelement zum dynamischen Abdichten eines Dichtkörpers in Gegenwart eines Schmierstoffs, wobei das Dichtelement einen elastomeren Grundkörper aus einem Fluorelastomer und eine Plasma-Beschichtung aufweist,
wobei die Beschichtung die Elemente Kohlenstoff, Sauerstoff, Silizium, Wasserstoff und gegebenenfalls Fluor aufweist,
wobei die Beschichtung mindestens an der Oberfläche folgende Eigenschaften aufweist:
   das Stoffmengenverhältnis (at%/at%) von C : Si ist > 5
   das Stoffmengenverhältnis (at%/at%) von O : Si ist > 3, und
   die Oberflächenenergie ist < 50 mN/m.

Das Dichtelement kann dabei weiter ausgestaltet sein, wie oben allgemein beschrieben wurde. Das Dichtelement, das einen Grundkörper aus einem Fluorelastomer aufweist, zeigt in dem erfindungsgemäßen System besonders vorteilhafte Eigenschaften, insbesondere in Kombination mit polaren Schmierstoffen, wie Polyalkylenglykolen.

Gegenstand der Erfindung ist auch ein Verfahren zur Herstellung eines erfindungsgemäßen Dichtelements durch Plasma-gestützte, bevorzugt chemische, Gasphasenabscheidung, umfassend die Schritte:
(a) Einbringen des elastomeren Grundkörpers in die Plasma-Vorrichtung,
(b) Einleiten mindestens einer gasförmige Silizium-Vorläuferverbindung in die Vorrichtung, und
(c) Beschichten des Grundkörpers in der Vorrichtung.

Die Plasma-gestützte chemische Gasphasenabscheidung ist allgemein ein Verfahren, bei dem sich gasförmige Vorläuferverbindungen, auch als Precursor oder Monomere bezeichnet, angeregt durch ein Plasma, auf einem Substrat als vernetzte Schicht niederschlagen. Die Monomere in der Gasphase werden durch beispielsweise Beschuss mit Elektronen und/oder energiereichen Ionen angeregt oder fragmentiert. Dabei entstehen radikalische oder ionische Molekülfragmente, die in der Gasphase miteinander reagieren und auf der Oberfläche des Substrats abgeschieden werden. Auf die so abgeschiedene Schicht wirkt die elektrische Entladung des Plasmas und dessen intensiver Ionen- und Elektronenbeschuss fortwährend ein, so dass weitere Reaktionen ausgelöst und eine Vernetzung der abgeschiedenen Moleküle erreicht wird. Das Plasma ist bevorzugt ein Niederdruckplasma, es kann jedoch auch ein Atmosphärendruckplasma eingesetzt werden. Die Beschichtung von Elastomeren im Plasma ist im Stand der Technik bekannt und wird beispielsweise in DE 10 2005 025 253 A1 offenbart. Auf das darin offenbarte Verfahren wird hiermit ausdrücklich Bezug genommen.

Erfindungsgemäß kann zunächst in Schritt (a) der Grundkörper eingeführt werden und anschließend die Vorläuferverbindung(en) in Schritt (b) zugefügt werden, oder umgekehrt. Im Plasma werden die Silizium-Vorläuferverbindung und gegebenenfalls die weiteren Vorläuferverbindungen aktiviert. Die eigentliche Polymerisation kann in der Gasphase und/oder in der Beschichtung stattfinden. In Schritt (c) lagern sich die Zwischenprodukte auf dem Grundkörper ab. Verfahren zur Herstellung von Kohlenstoff-haltigen Beschichtungen mittels Plasma-gestützter chemischer oder physikalischer Gasphasenabscheidung auf elastomeren Grundkörpern sind im Stand der Technik allgemein bekannt und werden beispielsweise in EP 2291439 B1, Lubwama, 2003, oder Martinez-Martinez und De Hosson, 2014, beschrieben (siehe jeweils oben).

Die erfindungsgemäßen Verwendungen, Dichtelemente, Dichtsysteme, Vorrichtungen und Verfahren lösen die Aufgabe, die der Erfindung zugrunde liegt. Es werden dynamische Dichtsysteme bereitgestellt, die eine Kombination vorteilhafter Eigenschaften aufweisen. Die Dichtelemente und Dichtsysteme zeigen ausgezeichnete tribologische Eigenschaften und dabei insbesondere ein sehr gutes Reibungsverhalten. Sie weisen außerdem eine hohe Stabilität auf. Insbesondere erfolgt allenfalls ein geringer, oft aber überhaupt kein Abrieb der Dichtkörper. Dadurch kann beispielsweise in der Praxis ein Welleneinlauf am Dichtkörper vollständig verhindert werden. Erfindungsgemäß werden stabile Systeme bereitgestellt, die - gegebenenfalls nach anfänglicher Selbst-Stabilisierung durch geringfügigen Abrieb der Dichtelemente - über lange Zeiträume stabil sind. Dies ist in hohem Maße vorteilhaft für eine Vielzahl von praktischen Anwendungen, wie bei Motoren, Getrieben oder Pumpen, wo die Lebensdauer insgesamt vom Verschleiß der Einzelteile abhängt.
Figur 1 zeigt schematisch und beispielhaft ein Dichtsystem aus Dichtelement, Dichtkörper und Schmierstoff.
Figur 2 zeigt das Ergebnis der Kontaktwinkelmessung eines Polyglykol-Schmierstoffs auf FKM mit Beschichtung (gestrichelte Linie) und ohne Beschichtung (durchgezogene Linie) wie in Beispiel 11 beschrieben.
Figur 3 zeigt die Stribeck-Kurven von beschichtetem FKM (Kreise) und unbeschichtetem FKM (Quadrate) wie in Beispiel 12 beschrieben.

### Ausführungsbeispiele

### Beispiele 1 bis 9: Herstellung und Charakterisierung von Beschichtungen

Verschiedene Elastomere (siehe Tabelle 1) werden in einem plasma-unterstützten Prozess der chemischen Gasphasenabscheidung mit einer Beschichtung versehen. Dazu wird eine Niederdruck-Plasma-Anlage für eine asymmetrische, kapazitiv gekoppelte Radiofrequenz-Entladung verwendet. Die elastomeren Grundkörper (Substrate) werden mit Kontakt zur Elektrode positioniert. Bei diesem Prozess wird als Kohlenstoffquelle und wesentliche Schicht-bildende Vorläuferverbindung Acetylen sowie ggfs. als eine sauerstofffreie Alkylsilan-Verbindung verwendet. Der Zusatz von weiteren Reaktiv- Gasen, bspw. Sauerstoff, Argon, Stickstoff, ist ebenfalls denkbar. Durch Anregung mit elektromagnetischer Strahlung, beispielsweise bei Radiofrequenz, werden diese Gase bei Prozessdrücken von wenigen Pascal in den Plasmazustand versetzt. Die Moleküle werden gespalten und kondensieren als Kohlenstoff-reiche Schicht, beim Einsatz des Alkylsilans mit niedrigem Siliziumanteil, auf der Oberfläche des Grundkörpers. Zur besseren Anbindung der Schicht werden die Elastomere zunächst in einem nicht schichtbildenden Plasma, bspw. aus Argon und/oder Sauerstoff, aktiviert. Hierbei können Fragmente des Substrats von der Oberfläche in die Plasmaphase übergehen und in die Beschichtung mit eingebaut werden. In Tabelle 2 sind beispielhaft die wesentlichen Beschichtungsschritte aufgeführt. Schicht 4 bildet eine Ausnahme der zur vorangegangenen Erläuterung. Abweichend dazu werden diese Schichten nicht in Kontakt mit der Elektrode abgeschieden und dienen als Vergleich zu Patent EP 2 291 439 B1.

**Tabelle 1: Verwendete Dichtungswerkstoffe**

| **Bezeichnung** | **Polymer** | **Vernetzungsmechanismus** | **Hauptfüllstoff** |
|---|---|---|---|
| FKM I | Fluorkarbonkautschuk | bispenolisch | Mineralische Füllstoffe |
| EPDM I | Ethylen-Propylen-DienKautschuk | peroxidisch | Ruß |
| NBR I | Nitrilbutylkautschuk | Schwefel | Mineralische Füllstoffe |

**Tabelle 2: Prozessparameter von Beschichtungsprozessen**

| **Prozessparameter** | **Schicht 1 (Vergleich)** | **Schicht 2** | **Schicht 3** | **Schicht 4 (Vergleich)** |
|---|---|---|---|---|
| RF-Leistung [W] | 400 | 300 | 300 | 300 |
| Massefluss Acetylen [sccm, N₂ kalibiert] | 100 | 350 | 350 | |
| Massefluss TMS [sccm, N₂ kalibiert] | | 15 | 25 | |
| Massefluss HMDSO [sccm, N₂ kalibiert] | | | | 120 |
| Massefluss O₂ [sccm, N₂ kalibiert] | : | 50 | 50 | 120 |

Die so abgeschiedenen Beschichtungen werden mittels Röntgen-Photoelektronen-Spektroskopie hinsichtlich der chemischen Zusammensetzung (in der Grenzfläche zu Luft) charakterisiert. Die Methode bestimmt hierbei allerdings nur die Schichtchemie der obersten Nanometer, auf keinen Fall die Zusammensetzung der gesamten Beschichtung. Vor der Messung wurden alle Proben mit Ethanol gereinigt. Die gemessenen Spektren werden auf den C 1s Peak bei 285,0 eV korrigiert.

**Tabelle 3: Chemische Zusammensetzung verschiedener Oberflächen**

| **Beispiel** | **Substrat** | **Si [at%]** | **F [at%]** | **O [at%]** | **C [at%]** | **sonstige [at%]** | **O/Si** | **C/Si** | **C/O** |
|---|---|---|---|---|---|---|---|---|---|
| 1 (V) | FKM I | 1,9 | 48,6 | 5,1 | 44,4 | | 2,7 | 23,4 | 8,7 |
| 1a (V) | FKM I mit Schicht 1 | | 19,1 | 11,6 | 68,2 | 1,3 | | | 5,9 |
| 2 | FKM I mit Schicht 2 | 2,3 | 10 | 14,5 | 73,3 | | 6,3 | 31,9 | 5,1 |
| 3 | FKM I mit Schicht 3 | 1,0 | 21,2 | 11,7 | 65,8 | 0,4 | 11,7 | 65,8 | 5,6 |
| 4 (V) | FKM I mit Schicht 4 | 16,7 | 10,5 | 35,5 | 35,2 | 2,1 | 2,1 | 2,1 | 0,99 |
| 5 (V) | EPDM I | 3,3 | | 6,6 | 90,1 | | 2 | 27,3 | 13,7 |
| 6 | EPDM I mit Schicht 2 | 3,3 | | 16,2 | 80,7 | | 4,9 | 24,5 | 5 |
| 7 (V) | NBR I | 2,6 | | 6,5 | 88,2 | 2,7 | 2,5 | 33,9 | 13,6 |
| 8 | NBR I mit Schicht 2 | 2,0 | | 10,4 | 87,6 | | 5,2 | 43,8 | 8,4 |
| 9 (V) | Edelstahl mit Schicht 2 | 1,4 | | 17,4 | 79,9 | 1,3 | 12,4 | 57,1 | 4,6 |

Die Ergebnisse sind in Tabelle 3 zusammengefasst. Die Beispiele 2, 3, 6 und 8 sind erfindungsgemäß. Die mit (V) gekennzeichneten Beispiele 1, 5 und 7 (ohne Beschichtung), 1a (ohne Si-Vorläuferverbindung), 4 (mit Si-O-reicher Beschichtung) und 9 (auf Stahl) sind Vergleichsbeispiele. Beispiel 4 mit Schicht 4 entspricht dabei den in EP 2 291 439 B1 beschriebenen Schichten, da die Bindungsenergie des Si 2p Signals, gemessen mittels XPS, im Vergleich zu Trimethylsiloxy-terminiertem PDMS um ca. 1 eV zu höheren Bindungsenergien verschoben ist. Der niedrige Gehalt von Si in den nicht beschichteten Vergleichsbeispielen 1,5 und 7 ist damit zu erklären, dass die Elastomere Additive wie Silikone oder Silica-Füllstoffe aufweisen. Der Vergleich der Eigenschaften zeigt, dass die Struktur der erfindungsgemäß beschichteten Oberflächen sehr unterschiedlich ist und dass die vorteilhaften Effekte hinsichtlich der tribologischen Eigenschaften und dem Welleneinlauf nur bei den erfindungsgemäßen Plasma-Beschichtungen erreicht werden (siehe nachfolgende Beispiele).

### Beispiel 10: Bestimmung der Oberflächenenergien und Kontaktwinkel

Zur Bestimmung der Oberflächenenergien werden Kontaktwinkelmessungen am liegenden Tropfen durchgeführt. Das Vorgehen erfolgt dabei mit Ausnahme des Prüfklimas analog zu der Norm DIN 55660-2 vom Dezember 2011. Die Messungen werden bei 23 - 26°C durchgeführt. Als Messflüssigkeiten werden Wasser und Diiodmethan verwendet. Die Oberflächenenergie wird nach der Methode von Owens-Wendt auf Basis der aus der Messung resultierenden Kontaktwinkel berechnet. Die Gesamtoberflächenenergie setzt sich dabei aus den polaren und den dispersen Anteilen zusammen.

Die Kontaktwinkelmessungen werden einen Tag, 7 und 30 Tage nach dem Beschichtungsprozess durchgeführt. Vor der Messung wurden alle Oberflächen mit Ethanol gereinigt. Da der Grundkörperwerkstoff ein Multikomponenten-System ist, dessen Einzelkomponenten z.T. zur Migration neigen, schwanken die Messwerte der Kontaktwinkel materialbedingt um bis zu 10°. Die Ergebnisse sind in Tabelle 4 zusammengefasst. Insgesamt zeigen die Messungen, dass die Oberflächenenergien relativ niedrig sind, so dass die Beschichtungen relativ gut benetzbar sind.

**Tabelle 4: Oberflächenenergien (in mN/m) von kohlenstoffreichen Beschichtungen auf verschiedenen Elastomeren.**

| **Bsp.** | **Produkt** | **nach 1 Tag** | | | **nach 7 Tagen** | | | **nach 30 Tagen** | | |
|---|---|---|---|---|---|---|---|---|---|---|
| | | **σₚ** | **σ_{d}** | **σ_{ges}** | **σₚ** | **σ_{d}** | **σ_{ges}** | **σₚ** | **σ_{d}** | **σ_{ges}** |
| 1 (V) | FKM I | 0,8 | 19,4 | 22,2 | 1,3 | 23,9 | 25,2 | 2,0 | 22,2 | 24,2 |
| 2 | FKM I mit Schicht 2 | 4,4 | 36,4 | 40,8 | 2,7 | 29,7 | 32,4 | 2,5 | 28,4 | 30,9 |
| 5 (V) | EPDM I | 0,1 | 29,7 | 29,8 | 1,3 | 24,3 | 25,6 | 0,4 | 28,0 | 28,4 |
| 6 | EPDM I mit Schicht 2 | 5,0 | 34,0 | 39,0 | 0,0 | 41,1 | 41,1 | 0,1 | 36,6 | 36,7 |
| 7 (V) | NBR I | 0,5 | 42,5 | 43,0 | 0,2 | 37,5 | 37,7 | 0,1 | 37,3 | 37,4 |
| 8 | NBR I mit Schicht 2 | 0,3 | 40,0 | 40,3 | 1,4 | 39,6 | 41,0 | 0,1 | 41 | 41,1 |

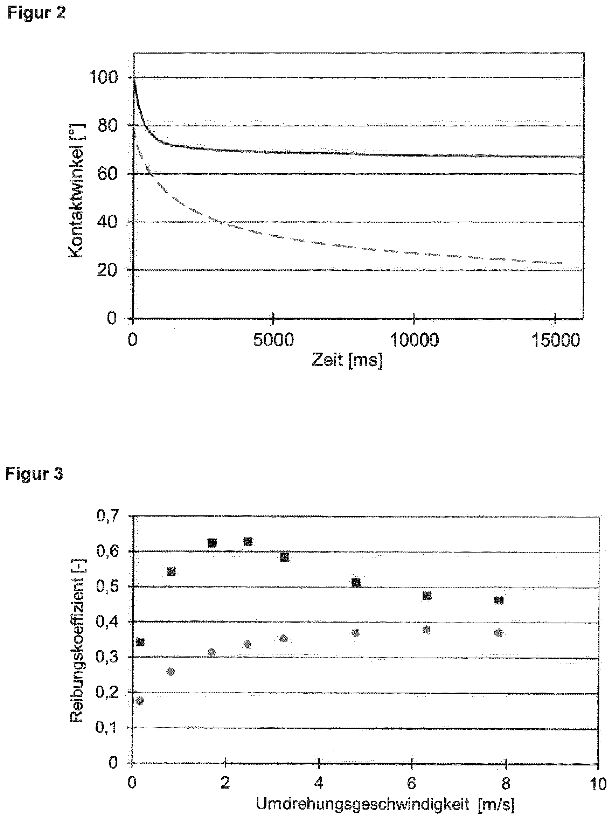

Der Kontaktwinkel zu einem marktüblichen Polyalkylenglykol-Öl der ISO-Viskositätsklasse 460 (der Marke Klübersynth UH1 6-460; Klüber Lubrication, DE) wird auf mit Schicht 2 beschichtetem und unbeschichtetem FKM I gemessen. Figur 2 zeigt das Ergebnis der Kontaktwinkelmessung auf FKM mit Beschichtung (gestrichelte Linie) und ohne Beschichtung (durchgezogene Linie) Durch die Beschichtung wird die Benetzung signifikant verbessert und der Kontaktwinkel im Gleichgewicht um etwa zwei Drittel von etwa 68° auf etwa 22% verringert. Daher sind die Beschichtungen besonders gut in Kombination mit Polyalkylenglykol als Schmierstoff geeignet.

### Beispiel 11: Reibungsverhalten ohne Schmierstoff

Um die Reibungsreduktion der Beschichtungen zu charakterisieren, werden beschichtete und unbeschichtete Prüfkörper über eine Edelstahl-Platte (Rₐ = 1,062 µm) bewegt und die notwendige Kraft aufgenommen. Drei Probekörper werden dazu in eine spezielle Aufnahme, die pro Probekörper eine Kontaktfläche zum Gegenlaufpartner von ca. 6,5 mm² ermöglicht, eingelegt. Die Aufnahme wird mit den Probekörpern nach unten auf den Gegenlaufpartner aufgelegt und mit einer Masse von 1 kg beschwert. Anschließend wird der Gegenlaufpartner mit einer Geschwindigkeit von 150 mm/min bewegt und die Kraft, die aufgewendet werden muss, um die Aufnahme auf der Stelle zu halten, gemessen. Die Messung wird dreimal hintereinander durchgeführt, die Mittelwerte sind in Tabelle 5 zusammengefasst. Die Ergebnisse zeigen, dass das Reibungsverhalten der Elastomere durch die Beschichtungen erheblich verbessert wird.

**Tabelle 5: Reibkräfte verschiedener Oberflächen**

| **aus Bsp.** | **Substrat** | **Kraft [N]** |
|---|---|---|
| 1 (V) | FKM I | 12,4 |
| 2 | FKM I mit Schicht 2 | 2,3 |
| 5 (V) | EPDM I | 10,9 |
| 6 | EPDM mit Schicht 2 | 2,4 |
| 7 (V) | NBR I | 11,1 |
| 8 | NBR I mit Schicht 2 | 2,5 |

Reibmessungen werden analog zu der vorangegangenen Beschreibung durchgeführt. Jedoch wird als Gegenlaufpartner eine polierte Edelstahloberfläche verwendet.

**Tabelle 6: Reibkräfte verschiedener Beschichtungen**

| **aus Bsp.** | **Substrat** | **Kraft [N]** |
|---|---|---|
| 1 (V) | FKM I | 16,1 |
| 1a (V) | FKM I mit Schicht 1 | 4,0 |
| 2 | FKM I mit Schicht 2 | 2,2 |
| 3 | FKM I mit Schicht 3 | 2,3 |
| 4 (V) | FKM I mit Schicht 4 | 9,5 |

Die Ergebnisse sind in Tabelle 6 gezeigt. Sie zeigen, dass das Reibungsverhalten der erfindungsgemäß beschichteten Elastomere (Beispiele 2, 3) deutlich besser ist als bei Elastomeren mit Beschichtungen ohne Silicium (Beispiel 1a) oder Beschichtungen mit hohem Si-O-Anteil (Beispiel 4).

### Beispiel 12: Reibungsverhalten mit Schmierstoff

Um die Eigenschaften des geschmierten Dichtsystems zu beschreiben, werden Vergleichsversuche in einem Ring-Scheibe-Prüfstand (siehe dazu auch M. Sommer, W. Haas: "A new approach on grease tribology in sealing technology: Influence of the thickener particles", Tribology International, Volume 103, November 2016, Pages 574-583) durchgeführt. Dazu werden Probekörper aus FKM I verwendet und vergleichend unbeschichtet und mit Schicht 2 beschichtet (gemäß den Beispielen 1 und 2) getestet. Als Schmierstoff wird ein Polyalkylenglykol-Öl der ISO-Viskositätsklasse 460 (Klübersynth UH1 6-460) verwendet. Der Prüfaufbau wird auf 60 °C temperiert. Figur 3 zeigt die Ergebnisse mit beschichtetem FKM (Kreise) und unbeschichtetem FKM (Quadrate). Es wird deutlich eine signifikante Reibungsreduktion durch die Beschichtung auch im geschmierten Dichtsystem beobachtet. Die Wirkung der Beschichtung wird insbesondere im vorderen Bereich der Kurven, in dem Mischreibung, Festkörper- und Grenzreibung vorliegen, deutlich. Optische Inspektion der Prüfkörper nach Ablauf der Untersuchungen zeigt bei den unbeschichteten Prüfkörpern minimalen Verschleiß. Bei den beschichteten Prüfköpern ist mit optischen Methoden kein Verschleiß erkennbar.

### Beispiel 13: Bestimmung des Abriebs mit Dichtringen und Schmierstoff im Kurzzeit-Bauteil-Test

Radialwellendichtringe (RWDR), bestehend aus einem Metalleinlegeteil, welches mit Fluorelastomer FKM I ummantelt ist, wird wie in Beispiel 2 beschrieben mit Schicht 2 versehen. In einem typischen Kurzzeittest werden diese Bauteile auf ihre Anwendungseigenschaften hin untersucht. Als Vergleich werden unbeschichtete Bauteile ebenfalls getestet. Bei diesem Kurzzeittest rotiert eine Stahlwelle (90MnCrV8, Härte 55-60 HRC, R_{z} = 1-5 µm, drallfrei) 96 h lang mit 3000 Umdrehungen pro Minute in dem Dichtring (p = 0,3 bar). Als Schmierstoff wird ein Polyalkylenglykol-Öl der ISO-Viskositätsklasse 460 (Klübersynth UH1 6-460) bei 45°C Ölsumpftemperatur verwendet. Die Laufspurbreite, die ein Maß für den Verschleiß der Dichtkante ist, beträgt nach Ende der Tests für beide Varianten 0,2 bis 0,4 mm. Als wesentlicher Unterschied kann aber der Verschleiß des Gegenlaufpartners, der sog. Welleneinlauf, identifiziert werden. Bei den unbeschichteten Bauteilen liegt er zwischen 7 und 35 µm. Bei den beschichteten Bauteilen ist kein Welleneinlauf messbar. Alle Messgrößen werden mit einem lichtmikroskopisch vermessen. Bei keinem der Dichtsysteme wurde Leckage festgestellt.

In einer weiteren Testserie werden Radialwellendichtringe (RWDR aus Kautschuk FKM I) mit den Schichten 1 bis 4 versehen und in dem beschriebenen 96 h Tests charakterisiert. Als Schmierstoff wird wiederum ein Polyalkylenglykol-Öl der ISO-Viskositätsklasse 460, dieses Mal bei einer Ölsumpftemperatur von 80 °C verwendet. Die Ergebnisse sind in Tabelle 7 zusammengefasst.

**Tabelle 7: Oberflächenenergien und Verschleiß verschieden beschichteter RWDR nach 96 h Bauteiltest**

| **Beschichtung** | **Oberflächenenergie [mN/m]** | **Laufspurbreite [mm]** | **Welleneinlauf [µm]** |
|---|---|---|---|
| Schicht 1 | 44,0 | 0,39-0,43 | 4,25 |
| Schicht 2 | 33,6 | 0,22-0,28 | 0 |
| Schicht 3 | 38,5 | 0,19-0,28 | 0 |
| Schicht 4 | 49,2 | 0,39-0,49 | 5,89 |

Die Ergebnisse zeigen, dass in den erfindungsgemäßen Dichtsystemen der Welleneinlauf des Dichtkörpers nicht nur reduziert, sondern sogar vollständig verhindert werden kann. Dagegen zeigen die Vergleichsversuche mit den kohlenstoffreichen Schicht 1 ohne Silicium und Schicht 4 (Si-O-reich) einen deutlichen Welleneinlauf, also einen Verschleiß des Dichtkörpers aus Stahl. Bei keinem der Dichtsysteme wurde Leckage festgestellt.

### Beispiel 14: Bestimmung des Abriebs mit Dichtringen und Schmierstoff im Siemens-Flender-Test

RWDR aus FKM I (75 FKM 585) werden wie im Beispiel 2 beschrieben mit einer Schicht 2 versehen. Vergleichende Tests werden mit beschichteten und unbeschichteten Bauteilen nach dem Protokoll für den dynamischen Siemens-Flender-Test durchgeführt [FB 73 11 008 (Stand 30.07.2015: Statische und dynamische Ölverträglichkeitstests mit Freudenberg Simmerringen zur Freigabe für den Einsatz in FLENDER-Getrieben, Tabellen T 7300 https://cache.industry.siemens.com/dl/files/658/44231658/att_861254/v1/DE_5-2_RWDR-_und_O-Ringtest_Rev06_2015-07-30.pdf). Als Schmierstoff wird ein Polyalkylenglykol-Öl der ISO-Viskositätsklasse 460 (Klübersynth UH1 6-460) bei 110 °C verwendet.

Nach Abschluss der Testserie ist der Verschleiß der Dichtkante mit 0,2 bis 0,4 mm für unbeschichtete und 0,1 bis 0,3 mm für beschichtete Ringe in gleicher Größenordnung. Der Welleneinlauf beträgt im tribologischen System mit unbeschichtetem FKM-Ring 30-40 µm. Im tribologischen System mit beschichteten Ringen kann wiederum kein Welleneinlauf festgestellt werden. Ebenso wurde bei keinem der Dichtsysteme Leckage festgestellt.

### Beispiel 15: Bestimmung des Abriebs mit gefetteten Dichtringen im Langzeittest

RWDR aus FKM I werden wie im Beispiel 2 beschrieben mit einer Schicht 2 versehen. Vor dem Test werden die beschichteten Oberflächen einer Prüfserie zusätzlich mit einen Fett versehen. Vergleichende Tests werden jetzt mit gefetteten und unbefetteten Bauteilen (Welle: C45R, Rz = 1-5 µm, drallfrei; Prüfparameter: t = 240 h, T_{Schmierstoff} = 70 °C, p = 0,25 bar) durchgeführt. Bei diesem Test rotiert eine Stahlwelle insgesamt 240 h lang, alternierend 20 h mit 2000 Umdrehungen pro Minute und 4 h ruhend, in dem Dichtring. Als Schmierstoff wird ein Polyglykol-Öl der ISO-Viskositätsklasse 220 bei 70°C Ölsumpftemperatur verwendet.

Nach Abschluss der Testserie beträgt die Laufspurbreite für gefettete wie ungefettete Dichtungen 0,1 bis 0,2 mm. In allen tribologischen Systemen (mit gefetteten bzw. ungefetteten Ringen) kann wiederum kein Welleneinlauf festgestellt werden. Dies bedeutet, dass die guten tribologischen Eigenschaften der erfindungsgemäß beschichteten Dichtringe auch bei zusätzlicher Verwendung von Schmierfetten erhalten bleiben. Bei der Verwendung von unbeschichteten, aber befetteten RWDR tritt ein signifikanter Welleneinlauf auf. Bei keinem der Dichtsysteme wurde Leckage festgestellt.

## Patentansprüche

1. Verwendung eines Dichtelements zum dynamischen Abdichten eines Dichtkörpers in Gegenwart eines Schmierstoffs, wobei das Dichtelement einen elastomeren Grundkörper und eine Plasma-Beschichtung aufweist,
wobei die Beschichtung die Elemente Kohlenstoff, Sauerstoff, Silizium, Wasserstoff und gegebenenfalls Fluor aufweist,
wobei die Beschichtung mindestens an der Oberfläche folgende Eigenschaften aufweist:
das Stoffmengenverhältnis C : Si (at%/ at%) ist > 5
das Stoffmengenverhältnis O : Si (at%/ at%) ist > 3, und
die Oberflächenenergie ist < 50 mN/m,
wobei die Stoffmengen an der Oberfläche mittels Röntgen-Photoelektronen-Spektroskopie ermittelt werden.

2. Verwendung gemäß Anspruch 1, wobei der Stoffmengenanteil von Si mindestens an der Oberfläche der Beschichtung 0,5 at% bis 5 at% ist, und/oder wobei der Stoffmengenanteil von C mindestens an der Oberfläche der Beschichtung > 60 at% ist.

3. Verwendung gemäß mindestens einem der vorhergehenden Ansprüche, wobei das Stoffmengenverhältnis C : O mindestens an der Oberfläche der Beschichtung > 3 (at%/at%) ist.

4. Verwendung gemäß mindestens einem der vorhergehenden Ansprüche, wobei das Stoffmengenverhältnis (at%/at%) von C : Si mindestens an der Oberfläche der Beschichtung von 10 bis 80 ist, das Verhältnis O : Si von 4 bis 15 (at%/at%) ist, und das Verhältnis C:O von 3 bis 12 (at%/at%) ist.

5. Verwendung gemäß mindestens einem der vorhergehenden Ansprüche, wobei die Beschichtung in einem Plasma-Beschichtungsverfahren erhältlich ist, bei dem eine gasförmige Silizium-Vorläuferverbindung eingesetzt wird.

6. Verwendung gemäß mindestens einem der vorhergehenden Ansprüche, wobei die Beschichtung mindestens an der Oberfläche folgende Stoffmengenanteile (in at%) aufweist:
| | |
|---|---|
| Kohlenstoff: | 50% bis 95%, bevorzugt 60% bis 90% |
| Sauerstoff: | 5% bis 25%, bevorzugt 9% bis 18% |
| Silizium: | 0,5% bis 5%, bevorzugt 1% bis 4% |
| Fluor: | 0% bis 35%, bevorzugt 0% bis 25% |

7. Verwendung gemäß mindestens einem der vorhergehenden Ansprüche, wobei der elastomere Grundkörper ein Fluorelastomer ist.

8. Verwendung gemäß mindestens einem der vorhergehenden Ansprüche, wobei der Kontaktwinkel der Beschichtung gegenüber dem Schmierstoff von 10° bis 50°, bevorzugt von 15 bis 30° ist.

9. Verwendung gemäß mindestens einem der vorhergehenden Ansprüche, wobei der Schmierstoff eine kinematische Viskosität > 200 mm²/s, gemessen bei 40°C nach ISO 3104, aufweist, und/oder
wobei der Schmierstoff ein Polyether, insbesondere ein Polyalkylenglykol, oder ein Polyester, oder ein Gemisch davon ist.

10. Verwendung gemäß mindestens einem der vorhergehenden Ansprüche, wobei die Verwendung bei einer Ölsumpftemperatur < 80°C erfolgt.

11. Verwendung gemäß mindestens einem der vorhergehenden Ansprüche, wobei das Dichtelement und/oder der Grundkörper ein Dichtring ist.

12. Dichtsystem, umfassend ein Dichtelement gemäß mindestens einem der vorhergehenden Ansprüche, einen Dichtkörper, einen dazwischen liegenden dynamischen Dichtspalt und gegebenenfalls einen Schmierstoff.

13. Vorrichtung, enthaltend ein dynamisches Dichtsystem gemäß Anspruch 12, insbesondere in Form eines Getriebes, einer Pumpe, eines Motors oder eines Kraftfahrzeugs.

14. Dichtelement zum dynamischen Abdichten eines Dichtkörpers in Gegenwart eines Schmierstoffs, wobei das Dichtelement einen elastomeren Grundkörper aus einem Fluorelastomer und eine Plasma-Beschichtung aufweist,
wobei die Beschichtung die Elemente Kohlenstoff, Sauerstoff, Silizium, Wasserstoff und gegebenenfalls Fluor aufweist,
wobei die Beschichtung mindestens an der Oberfläche folgende Eigenschaften aufweist:
das Stoffmengenverhältnis C : Si (at%/at%) ist > 5
das Stoffmengenverhältnis O : Si (at%/at%) ist > 3, und
die Oberflächenenergie ist < 50 mN/m,
wobei die Stoffmengen an der Oberfläche mittels Röntgen-Photoelektronen-Spektroskopie ermittelt werden.

15. Verfahren zur Herstellung eines Dichtelements gemäß Anspruch 14 durch Plasma-gestützte Gasphasenabscheidung, umfassend die Schritte:
(a) Einbringen des elastomeren Grundkörpers in die Plasma-Vorrichtung,
(b) Einleiten mindestens einer gasförmige Silizium-Vorläuferverbindung in die Vorrichtung, und
(c) Beschichten des Grundkörpers in der Vorrichtung.

## Claims

1. Use of a sealing element for the dynamic sealing of a seal-requiring component in the presence of a lubricant, where the sealing element has an elastomeric body and a plasma coating,
where the coating comprises the elements carbon, oxygen, silicon, hydrogen and optionally fluorine, where the coating has the following properties at least at the surface:
the atomic ratio C : Si (at%/at%) is > 5
the atomic ratio O : Si (at%/at%) is > 3, and
the surface energy is < 50 mN/m,
where the molar amounts at the surface are ascertained by means of X-ray photoelectron spectroscopy.

2. Use according to claim 1, where the atomic proportion of Si at least at the surface of the coating is from 0.5 at% to 5 at%, and/or
where the atomic proportion of C at least at the surface of the coating is > 60 at%.

3. Use according to at least one of the preceding claims, where the atomic ratio C : O at least at the surface of the coating is > 3 (at%/at%).

4. Use according to at least one of the preceding claims, where the atomic ratio (at%/at%) C : Si at least at the surface of the coating is from 10 to 80, the ratio O : Si is from 4 to 15 (at%/at%), and the ratio C : O is from 3 to 12 (at%/at%).

5. Use according to at least one of the preceding claims, where the coating is obtainable in a plasma-coating process which uses a gaseous silicon-precursor compound.

6. Use according to at least one of the preceding claims, where the coating has, at least at the surface, the following atomic proportions (in at%):
| | |
|---|---|
| Carbon: | from 50% to 95%, preferably from 60% to 90% |
| Oxygen: | from 5% to 25%, preferably from 9% to 18% |
| Silicon: | from 0.5% to 5%, preferably from 1% to 4% |
| Fluorine: | from 0% to 35%, preferably from 0% to 25% |

7. Use according to at least one of the preceding claims, where the elastomeric body is a fluoroelastomer.

8. Use according to at least one of the preceding claims, where the contact angle of the coating with respect to the lubricant is from 10° to 50°, preferably from 15 to 30°.

9. Use according to at least one of the preceding claims, where the kinematic viscosity of the lubricant is > 200 mm²/s, measured at 40°C to ISO 3104, and/or
where the lubricant is a polyether, in particular a polyalkylene glycol, or a polyester, or a mixture thereof.

10. Use according to at least one of the preceding claims, where the use takes place at an oil-sump temperature < 80°C.

11. Use according to at least one of the preceding claims, where the sealing element and/or the body is a sealing ring.

12. Sealing system comprising a sealing element according to at least one of the preceding claims, a seal-requiring component, a dynamic sealing gap situated therebetween, and optionally a lubricant.

13. Device comprising a dynamic sealing system according to Claim 12, in particular in the form of a drive-transmission system, a pump, a motor or a motor vehicle.

14. Sealing element for the dynamic sealing of a seal-requiring component in the presence of a lubricant, where the sealing element has an elastomeric body composed of a fluoroelastomer and has a plasma coating,
where the coating comprises the elements carbon, oxygen, silicon, hydrogen and optionally fluorine, where the coating has the following properties at least at the surface:
the atomic ratio C : Si (at%/at%) is > 5
the atomic ratio O : Si (at%/at%) is > 3, and
the surface energy is < 50 mN/m,
where the molar amounts at the surface are ascertained by means of X-ray photoelectron spectroscopy.

15. Process for the production of a sealing element according to Claim 14 via plasma-assisted gas-phase deposition, comprising the following steps:
(a) introduction of the elastomeric body into the plasma device,
(b) introduction of at least one gaseous silicon-precursor compound into the device, and
(c) coating of the body in the device.

## Revendications

1. Utilisation d'un élément d'étanchéité pour l'étanchéification dynamique d'un corps d'étanchéité en présence d'un lubrifiant, l'élément d'étanchéité présentant un corps de base élastomère et un revêtement plasma,
le revêtement comprenant les éléments carbone, oxygène, silicium, hydrogène et éventuellement fluor,
le revêtement présentant au moins sur la surface les propriétés suivantes :
le rapport des quantités de matière C:Si (%at/%at) est > 5
le rapport des quantités de matière O:Si (%at/%at) est > 3, et
l'énergie superficielle est < 50 mN/m,
les quantités de matière étant déterminées sur la surface par spectroscopie photoélectronique X.

2. Utilisation selon la revendication 1, la proportion de quantité de matière de Si, au moins sur la surface du revêtement, étant de 0,5 % at à 5 % at, et/ou la proportion de quantité de matière de C, au moins sur la surface du revêtement, étant > 60 % at.

3. Utilisation selon au moins l'une des revendications précédentes, le rapport des quantités de matière C:O, au moins sur la surface du revêtement, étant > 3 (%at/%at).

4. Utilisation selon au moins l'une des revendications précédentes, le rapport des quantités de matière (%at/%at) de C:Si, au moins sur la surface du revêtement, étant de 10 à 80, le rapport O:Si étant de 4 à 15 (%at/%at), et le rapport C:O étant de 3 à 12 (%at/%at).

5. Utilisation selon au moins l'une des revendications précédentes, le revêtement pouvant être obtenu par un procédé de revêtement par plasma, dans lequel on utilise un composé gazeux précurseur du silicium.

6. Utilisation selon au moins l'une des revendications précédentes, le revêtement présentant, au moins sur la surface, les proportions de quantité de matière (en %at) suivantes :
| | |
|---|---|
| Carbone : | 50 % à 95 %, de préférence 60 % à 90 % |
| Oxygène : | 5 % à 25 %, de préférence 9 % à 18 % |
| Silicium : | 0,5 % à 5 %, de préférence 1 % à 4 % |
| Fluor : | 0 % à 35 %, de préférence 0 % à 25 % |

7. Utilisation selon au moins l'une des revendications précédentes, le corps de base élastomère étant un élastomère fluoré.

8. Utilisation selon au moins l'une des revendications précédentes, l'angle de contact du revêtement avec le lubrifiant étant de 10° à 50°, de préférence de 15° à 30°.

9. Utilisation selon au moins l'une des revendications précédentes, le lubrifiant présentant une viscosité cinématique > 200 mm²/s, mesurée à 40 °C selon ISO 3104, et/ou
le lubrifiant étant un polyéther, en particulier un polyalkylèneglycol, ou un polyester ou un mélange de ceux-ci.

10. Utilisation selon au moins l'une des revendications précédentes, l'utilisation s'effectuant à une température du carter d'huile < 80 °C.

11. Utilisation selon au moins l'une des revendications précédentes, l'élément d'étanchéité et/ou le corps de base étant une rondelle d'étanchéité.

12. Système d'étanchéité comprenant un élément d'étanchéité selon l'une quelconque des revendications précédentes, un corps d'étanchéité, une fente d'étanchéité dynamique située entre eux, et éventuellement un lubrifiant.

13. Dispositif contenant un système d'étanchéité dynamique selon la revendication 12, en particulier sous forme d'un engrenage, d'une pompe, d'un moteur ou d'un véhicule à moteur.

14. Elément d'étanchéité pour l'étanchéification dynamique d'un corps d'étanchéité en présence d'un lubrifiant, l'élément d'étanchéité présentant un corps de base élastomère et un revêtement plasma,
le revêtement comprenant les éléments carbone, oxygène, silicium, hydrogène et éventuellement fluor,
le revêtement présentant au moins sur la surface les propriétés suivantes :
le rapport des quantités de matière C:Si (%at/%at) est > 5
le rapport des quantités de matière O:Si (%at/%at) est > 3, et
l'énergie superficielle est < 50 mN/m,
les quantités de matière étant déterminées sur la surface par spectroscopie photoélectronique X.

15. Procédé de fabrication d'un élément d'étanchéité selon la revendication 14 par un dépôt en phase gazeuse assisté par plasma, comprenant les étapes :
(a) introduction du corps de base élastomère dans le dispositif à plasma,
(b) injection d'au moins un composé gazeux précurseur de silicium dans le dispositif, et
(c) revêtement du corps de base dans le dispositif.
